# EUROPÄISCHE PATENTSCHRIFT

(11) **EP 4 361 464 B1**
(45) Veröffentlichungstag und Bekanntmachung des Hinweises auf die Patenterteilung: **09.09.2026**
(21) Anmeldenummer: 22216216.6
(22) Anmeldetag: 22.12.2022
(51) Int. Cl.: F16H 25/22

(54) **KUGELGEWINDETRIEB UND VERWENDUNG EINES KUGELGEWINDETRIEBES ALS BETÄTIGUNGSELEMENT IN EINEM BREMSVERSTÄRKERSYSTEM ODER ALS BETÄTIGUNGSELEMENT IN EINER BREMSE**
BALL SCREW ASSEMBLY AND USE OF A BALL SCREW AS AN ACTUATING ELEMENT IN A BRAKE BOOSTER SYSTEM OR AS AN ACTUATING ELEMENT IN A BRAKE
VIS À BILLES ET UTILISATION D'UNE VIS À BILLES COMME ÉLÉMENT D'ACTIONNEMENT DANS UN SYSTÈME D'AMPLIFICATION DE FREINAGE OU COMME ÉLÉMENT D'ACTIONNEMENT DANS UN FREIN

(43) Veröffentlichungstag der Anmeldung: 01.05.2024
(73) Patentinhaber: SFS Group International AG, 9435 Heerbrugg (CH)
(72) Erfinder: Zach, Marijo, 9443 Widnau (CH); Hanselmann, Jasmin, 9450 Altstätten (CH); Staudigl, Alexander Christoph, 6870 Bezau (AT); Sieber, Ralph, 9444 Diepoldsau (CH)

(56) Entgegenhaltungen:
- EP-A1- 3 763 970
- WO-A1-2010/043253
- US-A1- 2002 063 014

## Beschreibung

Die vorliegende Erfindung betrifft einen Kugelgewindetrieb mit einer spezifisch ausgestalteten Spindelmutter und die Anwendung eines solchen Kugelgewindetriebes.

### TECHNISCHER HINTERGRUND

Als Kugelumlaufspindel oder auch Kugelgewindetrieb wird üblicherweise ein Wälzschraubtrieb mit Kugeln als Wälzkörpern bezeichnet. Zu den Hauptbestandteilen eines Kugelgewindetriebs zählen eine Gewindespindel und eine diese Spindel umgreifende Spindelmutter. Zwischen diesen beiden Bauteilen laufen im Betrieb Kugeln um. Die Gewindezüge der Gewindespindel wie auch der Spindelmutter sind als Kugelrillen mit einem geeigneten Profil ausgebildet und komplementär so aufeinander abgestimmt, dass sie im montierten Zustand gemeinsam einen Kugelkanal bzw. eine Kugelführung bilden. Anders als bei einer Schraube-Mutter-Verbindung, bei der die Gewindeflanken flächig aufeinander gleiten, übernehmen beim Kugelgewindetrieb die umlaufenden Kugeln im Gewinde die Lastübertragung zwischen Mutter und Spindel. Die flächige Gleitbewegung wird also durch eine Rollbewegung ersetzt, was mit verringerter Reibung einhergeht.

Um einen geschlossenen Umlaufpfad für die Kugeln zu erhalten, werden Kugelrückführungen eingesetzt. Diese setzen sich zusammen aus zwei Kugelumlenkungen und einem dazwischenliegenden Überleitkanal. Die Kugelumlenkungen haben die Aufgabe, die Kugeln an einer ersten Stelle aus der Kugelführung zwischen Spindelmutter und Gewindespindel herauszuheben und an einer zweiten Stelle wieder zuzuführen. Eine Kugelrückführung stellt also als Ganzes einen Bypass dar, der eine oder mehrere Gewindezüge des Mutter-Spindelsystems überbrückt und so einen geschlossenen Umlaufpfad für die Kugeln eines Kugelgewindetriebes bildet. In der Regel werden die Kugeln in der Spindelmutter radial nach aussen aus der Kugelrille ausgehoben und innerhalb oder ausserhalb der Spindelmutter in einem Kanal oder einem Rohr (dem Überleitkanal) geführt, bevor sie an der dafür vorgesehenen Stelle wieder in den Kugelkanal zwischen Gewindespindel und Spindelmutter eingesetzt werden. Die Kräfte, die beim Ausheben der Kugeln aus der Kugelführung frei werden, müssen von der Kugelumlenkung aufgenommen bzw. abgeleitet werden.

Technisch gesehen arbeitet ein Kugelgewindetrieb als Schraubgetriebe, das eine Drehbewegung in eine Längsbewegung umsetzen kann, oder umgekehrt, wobei die Unter- bzw. Übersetzung durch die Dimensionierung der Gewindespindel und die Steigung des Gewindes bestimmt wird.

Kugelgewindetriebe werden in vielen technischen Anwendungen eingesetzt, wo eine Längsbewegung mittels Elektromotor und nicht über einen hydraulisch oder pneumatisch betriebenen Zylinder erreicht werden soll. Zunehmend spielen Kugelgewindetriebe eine Rolle in elektromechanischen und elektro-hydraulischen Bremssystemen, wo Kugelgewindetriebe als Ersatz für hydraulische betätigte Bremszylinder oder parallel zu bekannten Bremssystemen bei Bremsassistenzsystemen eingesetzt werden. Dort helfen sie die Bremskraft eines Fahrers zu verstärken bzw. als Teil eines Sicherheitssystems einen (Not-)Bremsvorgang einzuleiten oder zu unterstützen. Auch rein elektrisch betriebene Bremssysteme mit Kugelgewindetrieben als Bremszylinderersatz an jedem Rad werden damit möglich.

Im Folgenden soll die Herstellung einer Spindelmutter näher betrachtet werden. Sie umfasst im Grundsatz einen hohlzylindrischen Grundkörper mit einem axialen Innengewinde, das als Oberschale der Kugelumlaufrille ausgebildet ist. Dieser Grundkörper kann zur Gänze als Dreh-/Frästeil hergestellt werden, was sehr zeitaufwändig ist. Seit einiger Zeit werden die Spindelmuttern daher weitgehend als Pressteile aus Drahtabschnitten hergestellt, die aus Gründen der Maßgenauigkeit nur an wenigen Punkten drehend bzw. fräsend nachgearbeitet werden müssen.

Klassisch entfällt ein erheblicher Aufwand der spanenden Verarbeitung auf die Anfertigung des eigentlichen Überleitkanals in der Spindelmutter zwischen der Entnahme- und der Rückführungsstelle. Dieser wird üblicherweise als Kanal gebohrt oder als Nutrille in die Mantelfläche der Spindelmutter gefräst. Eine Nutrille muss nach Montage des Kugelgewindetriebs und dem Befüllen mit Kugeln abgedeckt werden. Das kann durch eine aufgeschobene bzw. aufzupressende Manschette geschehen oder aber durch ein sowieso an dieser Stelle vorzusehendes Lager, eine Flanschhalterung oder eine Hülse.

Insofern sind Kugelgewindetriebe vergleichsweise komplexe, aufwändig zu produzierende Bauelemente und eine Massenfertigung bei vertretbaren Kosten erfordert neuartige Ansätze.

### STAND DER TECHNIK

In der EP 3 763 970 wird ein Verfahren zur Herstellung eines Kugelgewindetriebes beschrieben, durch das in die Mantelfläche einer Spindelmutter mindestens zwei achsparallele Kanäle eingepresst werden. Diese Kanäle können - um Zusatzelemente ergänzt - als Überleitkanäle genutzt werden.

Die Schrift WO 2010/043253 beschreibt einen Kugelgewindetrieb, dessen Spindelmutter auf ihrer Aussenseite längs angeordneter Kanäle aufweist. Einer der Kanäle ist so ausgestaltet, dass er eine Kugelumlenkung aufnehmen kann. Eine Riemenscheibe zum Antrieb der Spindelmutter kann über einen der anderen Kanäle kraftschlüssig verbunden werden.

Der Erfindung liegt die Aufgabe zugrunde, einen Kugelgewindetrieb vorzustellen, der das Prinzip der eingepressten Kanäle in der Mantelfläche für weitere Anbauelemente nutzt.

Diese Aufgabe wird mit den Merkmalen des unabhängigen Anspruches gelöst. Vorteilhafte Ausführungsformen der Erfindung sind in den abhängigen Ansprüchen angegeben.

### DARSTELLUNG DER ERFINDUNG

Ein gattungsgemässer Kugelgewindetrieb umfasst im Grundsatz folgende Hauptelemente: Eine Gewindespindel und eine Spindelmutter, die die Gewindespindel koaxial zumindest teilweise umschliesst. Die Spindelmutter hat üblicherweise eine im Wesentlichen zylindrische Mantelfläche. "Im Wesentlichen zylindrisch" bedeutet, dass die Mantelfläche im Grundsatz eine Zylinderform aufweist, wobei von der Zylinderform abweichende Flächenabschnitte wie beispielsweise ebene Abflachungen, Befestigungsflansche, oder Klemmflächen nicht ausgeschlossen sind.

Im Zwischenraum zwischen Gewindespindel und Spindelmutter laufen eine Vielzahl von Kugeln in einem helixförmigen (gewindeartigen) Kugelkanal um. Mindestens eine Kugelrückführung sorgt durch zwei Kugelumlenkungen und einem zwischen diesen verlaufenden Überleitkanal für einen endlosen Pfad der umlaufenden Kugeln. Die Kugeln werden je nach Drehrichtung des Kugelgewindetriebs von der einen Kugelumlenkung aus dem Kugelkanal radial ausgehoben und umgelenkt in den Überleitkanal.

Nach dessen Durchlaufen werden sie von der anderen Kugelumlenkung aus dem Überleitkanal in den Kugelkanal zurückgeleitet.

Weiterhin verfügt der Kugelgewindetrieb über mindestens zwei achsparallel ausgerichtete, radial nach aussen offene, durch gleichzeitiges Einpressen in der Mantelfläche hergestellte Kanäle. Unter Kanal wird hierbei eine lineare Vertiefung in der Oberfläche (Mantelfläche) der Spindelmutter verstanden. Länge, Tiefe und Form richten sich nach der geforderten technischen Funktion. Üblicherweise müssen solche Kanäle aufwändig durch Fräsvorgänge eingearbeitet werden, was deren Herstellung verteuert. Durch einen gleichzeitigen Pressvorgang (Kaltumformung) können der axiale Mittenkanal und die besagten achsparallelen Kanäle zugleich eingepresst werden. Dadurch wird die Materialverdrängung während des Pressvorgangs kontrolliert. Dadurch sind auch die besagten Kanäle zu einer gemeinsamen Stirnseite der Spindelmutter hin offen. Als Ausgangsmaterial dienen Drahtabschnitte aus umformtauglichen Stahl.

Der Kugelgewindetrieb umfasst weiterhin ein Antriebselement, welches mit der Spindelmutter koaxial wirkverbunden und dafür ausgelegt ist, ein Drehmoment auf die Spindelmutter aufzubringen. Kugelgewindetriebe können grundsätzlich mit angetriebener Spindelmutter oder angetriebener Gewindespindel realisiert werden. Daher kann ein Antriebselement, wie beschrieben, je nach Einsatzart auch als Abtriebselement wirken. Der Begriff Antriebselement wird hier daher nicht spezifisch einschränkend verwendet. Im vorliegenden Fall erfolgt der Antrieb bevorzugt durch ein mit der Spindelmutter mechanisch verbundenes Antriebselement.

Die Wirkverbindung zwischen dem Antriebselement und der Spindelmutter wird erfindungsgemäss durch mindestens zwei strukturelle bzw. funktionelle Komponenten erzielt. Die Wirkverbindung baut einerseits auf einer Kontaktfläche mit einer Anschlusskontur auf. Mit Kontaktfläche sind die Bereiche gemeint, wo sich Antriebselement und Spindelmutter im verbauten Zustand flächig berühren. Mit Anschlusskontur ist die Formgebung bzw. Beschaffenheit dieser Kontaktfläche gemeint. Sie kann z.B. aus auf Passung gearbeiteten innen- (Antriebselement) bzw. aussenzylindrischen (Spindelmutter) Flächen bestehen. Diese Flächen zwischen Antriebselement und Spindelmutter können u.a. formschlüssig wirken, einen Reibschluss oder einen Klemmsitz zulassen.

Als zweite strukturelle bzw. funktionelle Komponente wird ein Mitnehmerelement vorgesehen, das so ausgestaltet ist, dass es im montierten Zustand in einen der Kanäle der Spindelmutter eingreift. Der Eingriff kann als Formschluss realisiert werden, der den gesamten, vom Antriebselement überdeckten Kanal ausfüllt oder auch nur abschnittsweise eingreift, wie dies für die Drehmomentübertragung von Bedeutung bzw. notwendig ist. Weiterhin kann das Mitnehmerelement so gestaltet werden, dass es zum Eingriff nur an den Kanalflanken anliegt, aber nicht am Kanalboden. Es könnte auch lediglich die Form eines Mitnehmerdorns einnehmen.

Ein Kugelgewindetrieb wird, wie im Stand der Technik bekannt, überwiegend aus Metall gefertigt, z.B. je nach Einsatz aus geeigneten Stahlsorten. Die Kugelumlenkungen werden in der Regel aus Kunststoff oder Leichtmetall gefertigt und in entsprechende Fräsöffnungen in der Spindelmutter eingesetzt.

Je nach Antriebskonzept kann das Antriebselement als Getriebezahnrad, als Zahnriemenscheibe oder als Kupplungselement ausgebildet sein.

Bei der Montage wird das Antriebselement von der Stirnseite her auf die Mantelfläche der Spindelmutter aufgeschoben und dort im Kontaktbereich verankert. Je nach technischen Gegebenheiten kann die Anschlusskontur im Bereich der Kontaktfläche ausgebildet werden als Passsitz mit geschliffenen Flächen, als Presssitz, unter Verwendung einer Toleranzhülse oder einer Klemmvorrichtung. Unter Klemmvorrichtung seien dabei Sicherungsringe oder Stifte gemeint, oder das Resultat von Verpressen, Verstemmen oder anderer bekannter Verfahren.

In einer Weiterbildung der Erfindung kann das Mitnehmerelement am Antriebselement als radial nach innen auskragende Feder ausgelegt sein, die formschlüssig in einen der Kanäle wie in eine Nut eingreift. Alternativ kann das Mitnehmerelement als separater Keil ausgebildet sein und als Teil einer Keilverbindung zwischen Antriebselement und Spindelmutter wirken.

Gemäss der Erfindung nutzt die (mindestens eine) Kugelrückführung einen der Kanäle als Überleitkanal. Ergänzt um zwei entsprechend in die Spindelmutter eingebrachte Kugelumlenkungen wird damit eine vollständige Kugelrückführung erzielt. Somit ergibt sich die Situation, dass die Kugelrückführung und das Mitnehmerelement denselben Kanal nutzen. Da ein Überleitkanal nur einen räumlich begrenzten Abschnitt des Kanals benötigt, kann je nach Auslegung der Kugelrückführung bzw. des Antriebselements Platz für beides vorhanden sein. Alternativ können natürlich die die Kugelrückführung und das Mitnehmerelement je einen separaten Kanal nutzen. Auch dies wird von der Auslegung des Kugelgewindetriebes abhängen.

Ein hier beschriebener Kugelgewindetrieb kann als ein Betätigungselement in einem Bremsverstärkersystem eingesetzt werden. Hierbei wird der Bremswunsch eines Fahrers als elektrisches Signal durch einen Kugelgewindetrieb, der auf einen Hydraulikkolben wirkt, umgesetzt. Ferner ist der Einsatz als mechanisches Betätigungselement direkt in einer Bremse möglich, z.B. durch Einbau in einen Bremssattel, wobei der Kugelgewindetrieb direkt einen Bremsbelag gegen eine Bremsscheibe drückt. Diese Einsatzbeispiele sind nicht abschliessend.

Die Erfindung wird nun mit Bezug auf die begleitenden Zeichnungen anhand besonders bevorzugter Ausführungsformen beispielhaft erläutert.

### KURZBEZEICHNUNG DER FIGUREN

- Figur 1: zeigt einen Querschnitt durch einen Kugelgewindetrieb gemäss der Erfindung mit Zusatzelementen;
- Figur 2: zeigt eine Stirnansicht A;
- Figur 3: zeigt eine Kugelrückführung im Detail.

### BESCHREIBUNG DER FIGUREN

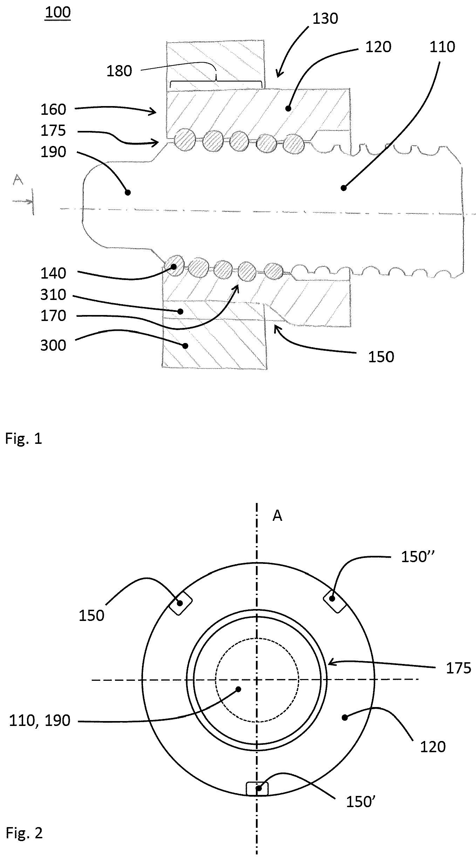

Figur 1 zeigt einen Längsquerschnitt durch einen Kugelgewindetrieb 100 gemäss vorliegender Erfindung. Hauptbestandteile sind die zentrale Gewindespindel 110 und die sie koaxiale teilweise umgebende, im Wesentlichen hohlzylindrische Spindelmutter 120. Zwischen der Aussenseite der Gewindespindel 110 und der Innenseite der Spindelmutter 120 befindet sich ein ringförmiger Spalt 175 mit dem Kugelkanal 170, der als gewindeförmiger Helixkanal für die umlaufenden Kugeln 140 dient. Die Gewindespindel 110 weist eine Mantelfläche 130 (hier im Wesentlichen zylindrisch) auf. Ein der Stirnseite 160 zugewandter Bereich der Mantelfläche 130 bildet eine Kontaktfläche 180, die im gezeigten Beispiel eine Zylinderfläche bildet. Im Bereich dieser Kontaktfläche 180 berühren sich im verbauten (montierten) Zustand die Spindelmutter 120 und ein Antriebselement 300. Das Antriebselement 300 verfügt über ein Mitnehmerelement 310, das (hier formschlüssig) in einen Kanal 150 eingreift, der in die Mantelfläche 130 im Bereich der Kontaktfläche 180 eingelassen ist.

Der kugelig ausgebildete Dornfortsatz 190 ist hier als Bauteil gezeigt, das z.B. in eine Pfanne eines Bremskolbens eingreifen und diesen verschieben kann.

Figur 1 zeigt keine weiteren, anwendungsspezifischen Anbau- und Ergänzungsteile, wie Axiallager oder Aufnahmen für den Kugelgewindetrieb. Diese Komponenten wird ein Fachmann fallweise nach Bedarf ergänzen.

Figur 2 zeigt den Kugelgewindetrieb 100 in einer Frontalansicht A. Der Fokus ist hierbei gelegt auf die symmetrische Anordnung von drei Kanälen 150, 150' 150" in der Spindelmutter 120, betrachtet frontal vom Dornfortsatz 190 her. Die Lage der Gewindespindel 110 und des ringförmigen Spaltes 175 ist gezeigt. Die Formgebung der Kanäle 150, 150', 150" ist exemplarisch.

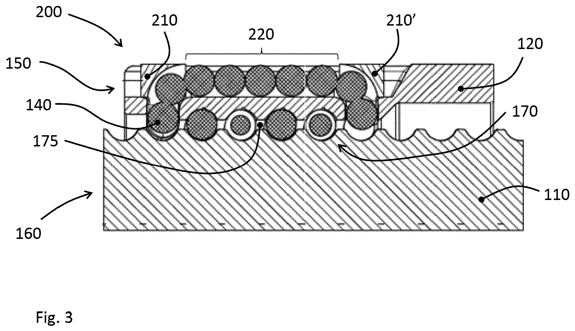

Figur 3 zeigt eine Kugelrückführung 200, wie sie in einem erfindungsgemässen Kugelgewindetrieb eingesetzt werden könnte. Das Bild zeigt einen Ausriss aus einem Querschnitt mit Gewindespindel 110 und Spindelmutter 120. Die Spindelmutter 120 zeigt einen von der Stirnseite 160 her eingepressten Kanal 150'. Die Kugelumlenkungen 210 und 210' leiten die Kugeln 140 zwischen dem Kugelkanal 170 und dem Überleitkanal 220 hin und her. Der Kugelkanal ist im ringförmigen Spalt 175 zwischen Gewindespindel 110 und Spindelmutter 120 angeordnet.

## Patentansprüche

1. Kugelgewindetrieb (100) umfassend:
- eine Gewindespindel (110) und
- eine Spindelmutter (120), die die Gewindespindel (110) koaxial zumindest teilweise umschliesst, wobei die Spindelmutter eine im Wesentlichen zylindrische Mantelfläche (130) aufweist;
- mindestens zwei achsparallel ausgerichtete, radial nach aussen offene, durch gleichzeitiges Einpressen in der Mantelfläche hergestellte Kanäle (150, 150'), wobei besagte Kanäle (150, 150') zu einer gemeinsamen Stirnseite (160) der Spindelmutter (120) hin offen sind;
- einer Vielzahl von Kugeln (140), die im Zwischenraum zwischen Gewindespindel (110) und Spindelmutter (120) in einem helixförmigen Kugelkanal (170) umlaufen; und
- mindestens eine Kugelrückführung (200) mit zwei Kugelumlenkungen (210, 210') und einem zwischen diesen verlaufenden Überleitkanal (220); wobei die Kugeln (140) je nach Drehrichtung des Kugelgewindetriebs (100) von der einen Kugelumlenkung (210) aus dem Kugelkanal (170) radial ausgehoben und umgelenkt werden in den Überleitkanal (220) und nach dessen Durchlaufen von der anderen Kugelumlenkung (210') aus dem Überleitkanal (220) in den Kugelkanal (170) zurückgeleitet werden;
- ein Antriebselement (300), welches mit der Spindelmutter (120) koaxial wirkverbunden und dafür ausgelegt ist, ein Drehmoment auf die Spindelmutter (120) aufzubringen,
wobei die Wirkverbindung zwischen Antriebselement (300) und der Spindelmutter (120) zumindest gebildet wird durch
- eine Kontaktfläche (180) mit einer Anschlusskontur und
- ein Mitnehmerelement (310),
**dadurch gekennzeichnet, dass** das Mitnehmerelement (130) so ausgestaltet ist, dass es im montierten Zustand in einen der mindestens zwei Kanäle (150, 150') der Spindelmutter(120) eingreift und mindestens eine Kugelrückführung (200) auch einen der mindestens zwei Kanäle (150, 150') als Überleitkanal (220) nutzt.

2. Kugelgewindetrieb (100) nach Anspruch 1, **dadurch gekennzeichnet, dass** das Antriebselement (300) als Getriebezahnrad, als Zahnriemenscheibe oder als Kupplungselement ausgebildet ist.

3. Kugelgewindetrieb (100) nach Anspruch 1 und 2, **dadurch gekennzeichnet, dass** das Antriebselement (300) von der Stirnseite (160) her auf die Mantelfläche (130) der Spindelmutter (120) aufgeschoben und dort im Kontaktbereich (180) verankert ist.

4. Kugelgewindetrieb (100) nach Anspruch 1 bis 3, **dadurch gekennzeichnet, dass** die Anschlusskontur im Bereich der Kontaktfläche (180) ausgebildet ist als Passsitz mit geschliffenen Flächen, als Presssitz, unter Verwendung einer Toleranzhülse oder einer Klemmvorrichtung.

5. Kugelgewindetrieb (100) nach Anspruch 1 bis 4, **dadurch gekennzeichnet, dass** das Mitnehmerelement (310) am Antriebselement (300) als radial nach innen auskragende Feder ausgelegt ist, die formschlüssig in einen der Kanäle (150, 150') wie eine Nut eingreift.

6. Kugelgewindetrieb (100) nach Anspruch 1 bis 4, **dadurch gekennzeichnet, dass** das Mitnehmerelement (310) als Keil ausgebildet ist und als Teil einer Keilverbindung zwischen Antriebselement (300) und Spindelmutter (120) wirkt.

7. Kugelgewindetrieb (100) nach Anspruch 1 bis 6, **dadurch gekennzeichnet, dass** die Kugelrückführung (220) und das Mitnehmerelement (310) denselben Kanal (150, 150') nutzen.

8. Kugelgewindetrieb (100) nach Anspruch 1 bis 6, **dadurch gekennzeichnet, dass** die die Kugelrückführung (220) und das Mitnehmerelement (310) je einen separaten Kanal (150, 150') nutzen.

9. Verwendung eines Kugelgewindetriebes nach Anspruch 1-8 als Betätigungselement in einem Bremsverstärkersystem oder als Betätigungselement in einer Bremse.

## Claims

1. Ball screw drive (100) comprising:
- a threaded spindle (110) and
- a spindle nut (120) which coaxially at least partially encloses the threaded spindle (110), wherein the spindle nut has an essentially cylindrical lateral surface (130);
- at least two axially parallel aligned, radially outwardly open channels (150, 150') produced by simultaneous pressing into the lateral surface, wherein said channels (150, 150') are open towards a common front face (160) of the spindle nut (120);
- a plurality of balls (140) which circulate in the intermediate space between the threaded spindle (110) and the spindle nut (120) in a helical ball channel (170); and
- at least one ball return (200) having two ball deflectors (210, 210') and a transfer channel (220) running between them; wherein the balls (140), depending on the direction of rotation of the ball screw drive (100), are radially lifted out of the ball channel (170) by the one ball deflector (210) and deflected into the transfer channel (220) and, after passing through it, are guided back from the transfer channel (220) into the ball channel (170) by the other ball deflector (210');
- a drive element (300), which is coaxially operatively connected to the spindle nut (120) and is designed to apply a torque to the spindle nut (120),
wherein the operative connection between the drive element (300) and the spindle nut (120) is at least formed by
- a contact surface (180) with a connecting contour and
- an entrainment element (310),
**characterized in that** the entrainment element (130) is designed such that, in the assembled state, it engages in one of the at least two channels (150, 150') of the spindle nut (120) and at least one ball return (200) also utilizes one of the at least two channels (150, 150') as a transfer channel (220).

2. Ball screw drive (100) according to claim 1, **characterized in that** the drive element (300) is designed as a transmission gear, a toothed belt pulley, or a coupling element.

3. Ball screw drive (100) according to claim 1 and 2, **characterized in that** the drive element (300) is pushed onto the lateral surface (130) of the spindle nut (120) from the front face (160) and is anchored there in the contact area (180).

4. Ball screw drive (100) according to claims 1 to 3, **characterized in that** the connecting contour in the area of the contact surface (180) is designed as a clearance fit with ground surfaces, as a press fit, using a tolerance sleeve or a clamping device.

5. Ball screw drive (100) according to claims 1 to 4, **characterized in that** the entrainment element (310) on the drive element (300) is designed as a radially inwardly projecting spring which engages positively in one of the channels (150, 150') like a groove.

6. Ball screw drive (100) according to claims 1 to 4, **characterized in that** the entrainment element (310) is designed as a wedge and acts as part of a wedge connection between the drive element (300) and the spindle nut (120).

7. Ball screw drive (100) according to claims 1 to 6, **characterized in that** the ball return (220) and the entrainment element (310) utilize the same channel (150, 150').

8. Ball screw drive (100) according to claims 1 to 6, **characterized in that** the ball return (220) and the entrainment element (310) each utilize a separate channel (150, 150').

9. Use of a ball screw drive according to claims 1-8 as an actuating element in a brake booster system or as an actuating element in a brake.

## Revendications

1. Vis d'entraînement à billes (100) comprenant :
- une broche filetée (110) et
- un écrou de broche (120) qui entoure au moins en partie la broche filetée (110) de façon coaxiale, l'écrou de broche présentant une surface d'enveloppe (130) sensiblement cylindrique ;
- au moins deux canaux (150, 150') orientés parallèlement, ouverts vers l'extérieur dans le sens radial, produits par estampage simultané dans la surface d'enveloppe, lesquels canaux (150, 150') sont ouverts vers une face d'extrémité commune (160) de l'écrou de broche (120) ;
- plusieurs billes (140) qui circulent dans l'espace compris entre la broche filetée (110) et l'écrou de broche (120) dans un canal de billes hélicoïdal (170) et
- au moins un retour de billes (200) avec deux déviations de billes (210, 210') et un canal de transit (220) passant entre celles-ci, lesquelles billes (140) sont, selon le sens de rotation de la vis d'entraînement à billes (100), soulevées dans le sens radial hors du canal de billes (170) par une des déviations de billes (210) et déviées dans le canal de transit (220) et, après être passées par celui-ci, ramenées du canal de transit (220) dans le canal de billes (170) par l'autre déviation de billes (210') ;
- un élément moteur (300) qui est en liaison active coaxiale avec l'écrou de broche (120) et qui est conçu pour exercer un couple de rotation sur l'écrou de broche (120),
la liaison active entre l'élément moteur (300) et l'écrou de broche (120) étant au moins formée par
- une surface de contact (180) avec un contour de raccordement et
- un élément entraîneur (310),
**caractérisée en ce que** l'élément entraîneur (130) est conçu de façon à se mettre en prise, dans l'état monté, dans l'un des au moins deux canaux (150, 150') de l'écrou de broche (120) et au moins un retour de billes (200) utilise aussi un des au moins deux canaux (150, 150') comme canal de transit (220).

2. Vis d'entraînement à billes (100) selon la revendication 1, **caractérisée en ce que** l'élément moteur (300) est conformé comme une roue dentée d'engrenage, comme un disque à courroie dentée ou comme un élément d'accouplement.

3. Vis d'entraînement à billes (100) selon les revendications 1 et 2, **caractérisée en ce que** l'élément moteur (300) est enfilé par la face frontale (160) sur la surface d'enveloppe (130) de l'écrou de broche (120) et y est ancré dans la zone de contact (180).

4. Vis d'entraînement à billes (100) selon les revendications 1 à 3, **caractérisée en ce que** le contour de raccordement est formé dans la région de la surface de contact (180) comme un ajustement de précision avec des surfaces meulées, comme un ajustement calé à la presse, en utilisant une douille de tolérance ou un dispositif de serrage.

5. Vis d'entraînement à billes (100) selon les revendications 1 à 4, **caractérisée en ce que** l'élément entraîneur (310) de l'élément moteur (300) est conçu comme un ressort qui s'évase vers l'intérieur dans le sens radial et qui se met en prise en correspondance de forme dans l'un des canaux (150, 150') comme une rainure.

6. Vis d'entraînement à billes (100) selon les revendications 1 à 4, **caractérisée en ce que** l'élément entraîneur (310) est conçu comme une clavette et a la fonction d'une partie d'un assemblage à clavette entre l'élément moteur (300) et l'écrou de broche (120).

7. Vis d'entraînement à billes (100) selon les revendications 1 à 6, **caractérisée en ce que** le retour de billes (220) et l'élément entraîneur (310) utilisent le même canal (150, 150').

8. Vis d'entraînement à billes (100) selon les revendications 1 à 6, **caractérisée en ce que** le retour de billes (220) et l'élément entraîneur (310) utilisent chacun un canal (150, 150') séparé.

9. Utilisation d'une vis d'entraînement à billes selon les revendications 1 à 8 comme élément d'actionnement dans un système de servofrein ou comme élément d'actionnement dans un frein.
